# EUROPÄISCHE PATENTSCHRIFT

(11) **EP 1 892 823 B1**
(45) Veröffentlichungstag und Bekanntmachung des Hinweises auf die Patenterteilung: **29.02.2012**
(21) Anmeldenummer: 07111151.2
(22) Anmeldetag: 27.06.2007
(51) Int. Cl.: H02M 7/219

(54) **Verfahren zur Regelung eines Netzstromrichters für Schienenfahrzeuge**
Method for regulating a line power converter for rail vehicles
Procédé destiné à la régulation d'un convertisseur de puissance côté réseau pour véhicules sur rail

(30) Priorität: 24.08.2006 AT 14102006
(43) Veröffentlichungstag der Anmeldung: 27.02.2008
(73) Patentinhaber: Siemens Aktiengesellschaft Österreich, 1210 Wien (AT)
(72) Erfinder: Glasl, Markus, 1130, Wien (AT)
(74) Vertreter: Maier, Daniel Oliver

(56) Entgegenhaltungen:
- EP-A2- 0 370 388
- DE-C1- 19 728 318

## Beschreibung

Die Erfindung betrifft ein Verfahren zur Regelung eines Netzstromrichters für Schienenfahrzeuge, wobei mittels eines Stromabnehmers, welcher eine Netzspannung eines einphasigen Wechselstromnetzes abgreift, dem Netzstromrichter über einen Transformator ein Netzstrom zugeführt wird und am Netzstromrichter ausgangsseitig eine konstante Zwischenkreisgleichspannung erzeugt wird. Des Weiteren betrifft die Erfindung eine Anordnung zur Durchführung des Verfahrens.

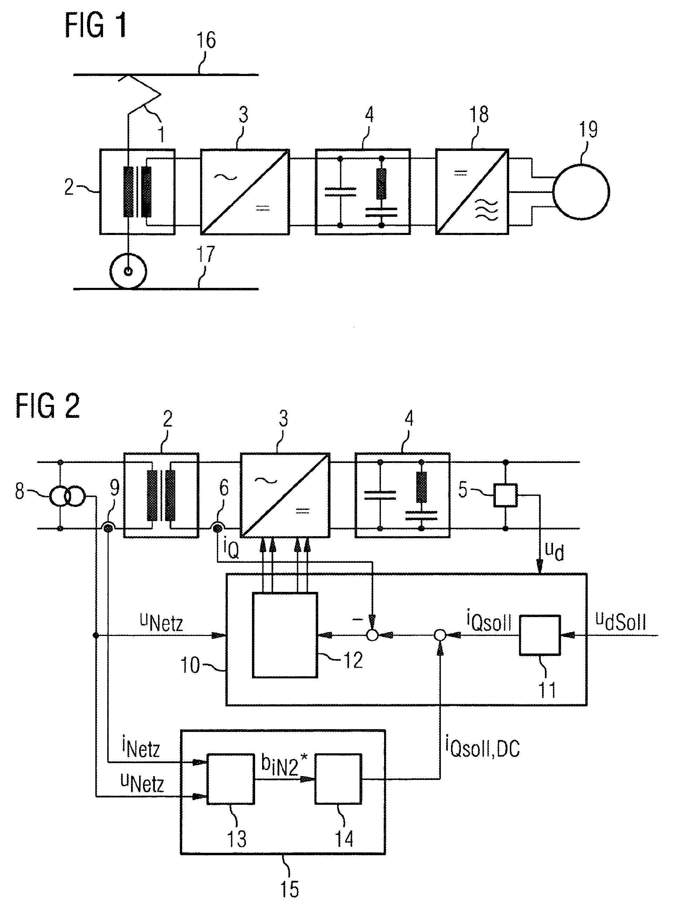

Netzstromrichter für netzgespeiste Traktionsantriebe in Schienenfahrzeugen sind aus dem Stand der Technik seit langem bekannt (siehe Figur 1). Über einen Stromabnehmer wird die Netzspannung einer speisenden Oberleitung (z.B 15 kV, 16 2/3 Hz) abgegriffen und einer Primärwicklung eines Transformators zugeführt, wobei die Gleisanlagen das Bezugspotenzial bilden. Eine Sekundärwicklung des Transformators speist über den geregelten Netzstromrichter einen Spannungszwischenkreis mit einer durch die Regelung des Netzstromrichters konstant gehaltenen Zwischenkreisgleichspannung. Dabei ist der Netzstromrichter vorzugsweise als Vierquadrantensteller ausgebildet, da sich damit ein Strom weitgehend beliebiger Phasenlage zur Fahrdrahtspannung einstellen lässt.

Ein an der Zwischenkreisgleichspannung liegender Maschinenstromrichter speist einen Drehstromasynchronmotor mit variabler Frequenz und Spannung, um im Motor bei der vorliegenden Drehzahl das gewünschte Antriebsmoment zu erzeugen.

Durch verschiedene Einflussfaktoren treten im Netzstrom Harmonische auf, insbesondere durch eine Vormagnetisierung des Transformators mit einem damit verbundenen starken Anstieg des Magnetisierungsstromes. Diese Harmonischen sind vor allem dann unerwünscht, wenn bestimmte Frequenzen betroffen sind, welche von Bahnbetreibern in vielen Ländern für die Zugssicherungstechnik verwendet werden. So werden beispielsweise in Österreich und Deutschland Wechselspannungssignale mit einer Frequenz von 100 Hz zur Gleisüberwachung eingesetzt, wobei diese Frequenz der 6. Harmonischen in einem 16 2/3 Hz Netz entspricht.

Dabei ist eine Strecke in Gleiskreise unterteilt, an deren Beginn eine 100 Hz Wechselspannung zwischen beiden Schienen anliegt. Am Ende eines Gleiskreises detektiert ein frequenzselektives Empfangsrelais die Spannung zwischen den Schienen. Liegt die eingespeiste Wechselspannung noch an, so zieht das Relais an und meldet den Gleiskreis als frei. Befindet sich jedoch ein Zug auf dem Gleiskreis, wird das eingespeiste Signal durch die Achsen des Zuges kurzgeschlossen und das Empfangsrelais fällt ab. Der Gleiskreis wird damit als besetzt gemeldet.

Durch den Rückstrom eines Triebfahrzeugs kann es zu einer Beeinflussung der Funktion eines Gleiskreises kommen, wenn im Netzstrom eine 100 Hz Harmonische enthalten ist. Um Fehlfunktionen eines Gleiskreises zu vermeiden, darf der 100 Hz Störstrom des Triebfahrzeugs einen Grenzwert (z.B. 2A) nicht überschreiten. Deshalb ist nach dem Stand der Technik bei modernen Schienenfahrzeugen eine 100 Hz Störstromüberwachungseinrichtung vorgesehen, welche im Falle einer unzulässigen 100 Hz Störstromüberschreitung das Triebfahrzeug mittels eines Hauptschalters vom Netz trennt.

Zur Unterdrückung der 100 Hz Harmonischen im Netzstrom ist aus der österreichischen Patentschrift AT 408 296 B ein Verfahren für einen Vierquadrantensteller bekannt, bei welchem Gleichanteile im sekundärseitigen Strom in einem Gleichstromregelkreis erfasst und zu Null ausregelt werden.

Die grundlegende Regelung eines ein- oder mehrfachen Vierquadranten-Netzstromrichters ist dabei aus der österreichischen Patentschrift AT 224 196 bekannt.
Zusätzlich ist in der AT 408 296 B eine Oberschwingungsregelung angegeben, mit der gezielt einzelne Harmonische - insbesondere auch geradzahlige Harmonische - unterdrückt werden können. Allerdings erfasst dieses Verfahren nur sekundärseitige Harmonische und nicht durch primärseitige Gleichstromvormagnetisierung hervorgerufene geradzahlige Harmonische im Primärstrom.

Ein weiteres Verfahren zur Vermeidung von 100 Hz Harmonischen ist aus der DE 44 34 378 C1 bekannt. Dabei wird neben der 100 Hz Harmonischen auch die 50 Hz Stromoberschwingung durch eine in die Regelung eines Vierquadrantenstellers implementierte Störstromregelung unterdrückt. Eine primärseitige Vormagnetisierung des Transformators wird dabei nicht erfasst.

In der JP 12 05 307 wird eine Verfahren zur Detektion einer Gleichstromvormagnetisierung des Transformators eines an einem einphasigen Wechselstromnetz betriebenen Fahrzeugs angegeben, mit welchem eine primärseitige Gleichstromvormagnetisierung detektiert werden kann. Dieses Verfahren basiert auf der Gleichrichtung des gemessenen Primärstromes und einem nachgeschaltetem Bandpassfilter, welches auf die Netzfrequenz abgestimmt ist. Liegt keine Gleichstromvormagnetisierung vor, so enthält das Signal zufolge der Gleichrichtung nur geradzahlige Harmonische, jedoch keinen Spektralanteil bei der Netzfrequenz. Das Ausgangssignal des Bandpassfilters ist daher Null. Liegt Gleichstromvormagnetisierung vor, so enthält das Signal zufolge der Halbwellenunsymmetrie nach der Gleichrichtung einen netzfrequenten Anteil, der am Ausgang des Bandpassfilters gemessen werden kann. Eine Maßnahme zur Vermeidung einer primärseitigen Vormagnetisierung wird dabei nicht angegeben.

Triebfahrzeuge können äußeren Bedingungen ausgesetzt sein, die zu einer primärseitigen Vormagnetisierung des Transformators führen. So ist beispielsweise bekannt, dass bei mit Raureif überzogenen Oberleitungen infolge niedriger Temperaturen Lichtbögen zwischen Oberleitung und Stromabnehmer auftreten. Die Eigenschaften dieser Lichtbögen sind dabei von der Polarität der Netzspannung abhängig, so dass der abgegriffene Netzstrom einen erheblichen Gleichstromanteil aufweist (siehe dazu L. Buhrkall: "DC components due to ice on the overhead contact wire of AC electrified railways", Elektrische Bahnen 103 (2005), Heft 8, Seite 380-389).

EP 370 388 zeigt ein Verfahren gemäß dem Oberbegriff des Anspruchs 1.

Mit den aus dem Stand der Technik bekannten Verfahren ist eine Vermeidung von 100 Hz Stromoberschwingungen infolge hoher primärseitiger Vormagnetisierung - z.B. durch vereiste Oberleitungen - nicht möglich. Bei Triebfahrzeugen mit einer oben beschriebenen 100 Hz Störstromüberwachungseinrichtung führen derartige Betriebsbedingungen infolge zu hoher primärseitiger 100 Hz Stromoberschwingungen zum Abschalten des Hauptschalters und damit zum Ausfall des Triebfahrzeugs. Bei älteren Triebfahrzeugen ohne 100 Hz Störstromüberwachungseinrichtung kann es zu Fehlfunktionen der Zugsicherungstechnik kommen.

Der Erfindung liegt die Aufgabe zugrunde, für ein Verfahren der eingangs genannten Art eine Verbesserung gegenüber dem Stand der Technik anzugeben.

Die Erfindung betrifft ein Verfahren gemäß Anspruch 1 und eine Vorrichtung gemäß Anspruch 4.

Erfindungsgemäß wird diese Aufgabe gelöst durch ein Verfahren zur Regelung eines Netzstromrichters für Schienenfahrzeuge, wobei mittels eines Stromabnehmers, welcher eine Netzspannung eines einphasigen Wechselstromnetzes abgreift, dem Netzstromrichter über einen Transformator ein Netzstrom zugeführt wird und am Netzstromrichter ausgangsseitig eine konstante Zwischenkreisgleichspannung erzeugt wird, wobei auf der Transformatorprimärseite ein Gleichstromanteil des Netzstromes mittels geeigneter Mess- und Auswerteeinrichtungen detektiert wird und wobei ein dem Gleichstromanteil entsprechender Gleichstromsollwert einem Stromsollwert einer sekundärseitigen Stromregelung des Netzstromrichters in der Weise überlagert wird, dass ein von der Stromregelung eingestellter sekundärseitiger Gleichstrom einer Vormagnetisierung des Transformators entgegenwirkt.

Mit diesem Verfahren ist sichergestellt, dass der Transformator nicht durch primärseitige Gleichstromanteile des Netzstromes vormagnetisiert wird. Damit erfolgt kein Anstieg des Magnetisierungsstromes und es entstehen keine Harmonischen, die zum Ansprechen einer Störstromüberwachungseinrichtung führen könnten. Triebfahrzeuge mit Netzstromrichtern, die mit diesem Verfahren betrieben werden, sind somit ausfallssicherer als Treibfahrzeuge nach dem Stand der Technik, selbst bei vereister Oberleitung mit Lichtbogenbildung.

Eine vorteilhafte Ausprägung der Erfindung sieht vor, dass der primärseitige Gleichstromanteil mittels eines aktiven Netzstromwandlers und einer geeigneten Auswerteeinrichtung detektiert wird. Mit einem derartigen Wandler wird ein primärseitiger Gleichstromanteil direkt erfasst und unmittelbar einer Regelung zur Vorgabe eines Gleichstromsollwertes zugeführt.

Es ist aber auch vorteilhaft, wenn der primärseitige Gleichstromanteil mittels eines passiven Netzstromwandlers und eines passiven Netzspannungswandlers und einer geeigneten Auswerteeinrichtung durch eine Analyse der zweiten Oberschwingung des Netzstromes detektiert wird. Derartige passive Wandler sind in der Regel in einem Triebfahrzeug vorhanden, so dass keine zusätzlichen Wandler eingebaut werden müssen. Gegenüber dem Einsatz aktiver Wandler reduziert sich somit der Herstellungsaufwand. Ein weiterer Vorteil besteht darin, dass gegenüber aktiven Wandlern bei passiven Wandlern keine Offsetabgleich-Verfahren zur Justierung erforderlich sind.

Dabei ist es bei der Erfindung vorgesehen, daß in einem Vormagnetisierungsdetektor mittels einer Diskreten Fourier Transformation der komplexe Zeitzeiger der zweiten Oberschwingung des Netzstromes ermittelt wird und daß das Ausmaß der Vormagnetisierung als Amplitude dieses Zeitzeigers bestimmt wird und daß aus der Phasenlage der zweiten Oberschwingung des Netzstromes zur Grundschwingung der Netzspannung die Richtung der Vormagnetisierung bestimmt wird und daß des Weiteren Ausmaß und Richtung der Vormagnetisierung einem Vormagnetisierungsregler zugeführt werden. In diesem Vormagnetisierungsregler wird daraus ein Gleichstromsollwert für die Stromregelung des Netzstromrichters bestimmt.

Damit ist das Verfahren unter ausschließlicher Nutzung der für die Regelung des Netzstromrichters bereits vorhandenen Hardware durchführbar. Die für die Bestimmung der Vormagnetisierung angegebenen Verfahrensschritte können problemlos in der vorhandenen Hardware implementiert werden.

Für eine Anordnung zur Durchführung des Verfahrens ist es vorteilhaft, wenn auf der Transformatorprimärseite geeignete Messeinrichtungen zur Erfassung des Netzstromes und der Netzspannung vorgesehen sind und wenn diese Messeinrichtungen mit einer Auswerteeinrichtung zur Vorgabe eines Gleichstromsollwertsignals verbunden sind. Dabei ist des Weiteren auf der Transformatorsekundärseite eine Messeinrichtung zur Erfassung des sekundärseitigen Stromes vorgesehen und ein Stromregler zur Ansteuerung des Netzstromrichters angeordnet, welchem ein aus einem Sollwertsignal, dem Gleichstromsollwertsignal und einem Messsignal des sekundärseitigen Stromes gebildetes Eingangssignal zugeführt ist.

Mit dieser Anordnung ist sichergestellt, dass die Zwischenkreisspannung verlässlich auf einem konstanten Wert bleibt und dass alle Funktionen des Traktionsantriebes unbeeinflusst von der Vormagnetisierungsunterdrückung aufrecht sind.

Dabei umfassen die Messeinrichtungen bei der ersten Ausführungsform einen aktiven Netzstromwandler und die Auswerteeinrichtung umfasst ein Tiefpassfilter und einen Gleichstromregler zur Vorgabe eines Gleichstromsollwertsignals.

Bei der zweiten Ausführungsform umfassen die Messeinrichtungen einen passiven Netzstromwandler und einen passiven Netzspannungswandler und die Auswerteeinrichtung einen Vormagnetisierungsdetektor und einen Vormagnetisierungsregler zur Vorgabe eines Gleichstromsollwertsignals.

Von Vorteil ist es des Weiteren, wenn der Netzstromrichter als Vierquadrantensteller ausgebildet ist. Der Netzstrom kann damit in einfacher Weise in Phase zur Netzspannung geregelt werden und es ist die Möglichkeit der Rückspeisung gegeben.

Die Erfindung wird nachfolgend in beispielhafter Weise unter Bezugnahme auf die beigefügten Figuren erläutert. Es zeigen in schematischer Darstellung:
- Fig. 1: Komponenten eines Traktionsantriebs
- Fig. 2: Regelungsanordnung mit passiven Messwandlern
- Fig. 3: Vormagnetisierungsdetektor
- Fig. 4: Vormagnetisierungsregler
- Fig. 5: Regelungsanordnung mit aktiven Messwandlern

In Figur 1 sind die Komponenten eines elektrischen Traktionsantriebs für Schienenfahrzeuge, gespeist aus einem einphasigen Wechselstromnetz, als Prinzipschaltbild vereinfacht dargestellt. Über einen Stromabnehmer 1 wird die Wechselspannung der speisenden Oberleitung 16 abgegriffen und der Oberspannungswicklung des Traktions-Transformators 2 zugeführt. Die Sekundärwicklung des Transformators 2 speist über einen geregelten Netzstromrichter 3, der vorzugsweise als Vierquadrantensteller ausgeführt ist, einen Spannungszwischenkreis 4 mit einer durch die Regelung des Netzstromrichters 3 konstant gehaltenen Gleichspannung. Der an dieser Gleichspannung liegende Maschinenstromrichter 18 speist einen Drehstrom-Asynchronmotor 19 mit variabler Frequenz und Spannung, um im Drehstrom-Asynchronmotor 19 bei der vorliegenden Drehzahl das gewünschte Antriebsmoment zu erzeugen.

Figur 2 zeigt einen Regelkreis für eine beispielhafte Ausprägung der Erfindung mit passiven Messwandlern 8 und 9. Ausgegangen wird dabei von einer Schaltungsanordnung gemäß Figur 1. Mit Strom- und Spannungswandlern 5, 6, 8, 9 werden die Istwerte der für den Betrieb des Netzstromrichters 3 relevanten Größen erfasst und einem Regler 10 als Messsignale zugeführt. Es sind dies die mit einem Messglied 5 erfasste Spannung u_{d} des Zwischenkreises 4, der mit einem Transfoshunt 6 erfasste Sekundärstrom i_{Q} des Transformators 2, der mit einem passiven Netzstromwandler 9 erfasste primäre Netzstrom i_{Netz} sowie die mit dem passiven Netzspannungswandler 8 erfasste primäre Netzspannung u_{Netz}. Während die Messglieder 5 und 6 sowohl Gleichanteil als auch Wechselanteile erfassen, wird von den passiven Wandlern 8 und 9 nur der Wechselanteil, nicht jedoch allfällige Gleichanteile übertragen.

Das dem Regler 10 zugrunde liegende Verfahren ist in der oben genannten Patentschrift AT 224 196 offen gelegt. Der Regler 10 umfasst eine zweischleifige Kaskadenregelung, bei der ein Spannungsregler 11 durch Vergleich des Istwertes der Zwischenkreisgleichspannung u_{d} mit dem gewünschten Spannungssollwert u_{d,Soll} einen Stromsollwert i_{QSoll} für die unterlagerte Stromregelung 12 vorgibt. Die Stromregelung 12 steuert unter Berücksichtigung des Istwertes der Netzspannung u_{Netz}, basierend auf dem Vergleich des gemessenen Stromistwertes i_{Q} mit dem Sollwert i_{QSoll}, die Halbleiterschalter des gesteuerten Netzstromrichters 3 an.

Die Aufgabe der Vermeidung von Gleichstromvormagnetisierung des Transformators 2 wird durch einen Vormagnetisierungsregler 14 gelöst, der aus dem Ausgangssignal b_{iN,2}* eines Vormagnetisierungsdetektors 13 einen Gleichstromsollwert i_{QSoll,DC} als Korrekturwert für den Stromsollwert i_{QSoll} des Stromreglers 12 berechnet. Dadurch wird über die Sekundärwicklung des Transformators 2 ein der Vormagnetisierung entgegenwirkender Gleichstrom eingeprägt.

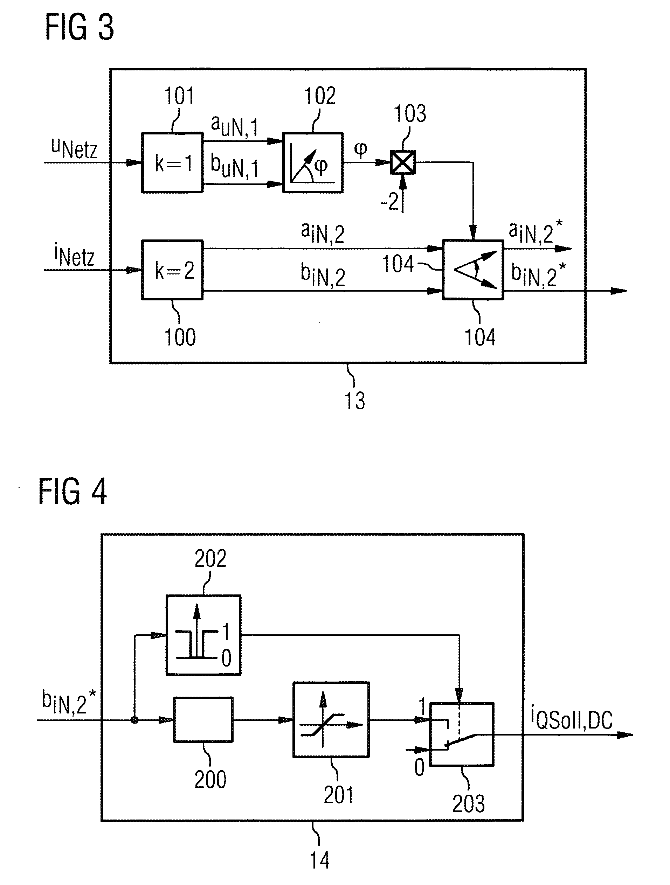

Die Funktionsweise des Vormagnetisierungsdetektors 13 ist in Figur 3 dargestellt. Die Vormagnetisierung wird dabei durch Auswertung der 2. Oberschwingung des Netzstromes i_{Netz} erfasst. Bei Vorliegen einer Gleichstromvormagnetisierung des Transformators 2 wird die positive und negative Halbwelle des Netzstromes i_{Netz} stark unsymmetrisch. Dies äußert sich nach Fourier in ausgeprägten geradzahligen Harmonischen, insbesondere in einer gut messbaren 2. Oberschwingung des Netzstromes. Im Vormagnetisierungsdetektor 13 wird daher mittels einer Diskreten Fourier Transformation 100 der komplexe Zeitzeiger I_{Netz,2} = a_{iN,2} + j.b_{iN,2} der zweiten Harmonischen (k=2) des gemessenen Netzstromsignals i_{Netz} erfasst. Die Amplitude dieses Zeitzeigers ist ein Maß für das Ausmaß der vorliegenden Gleichstromvormagnetisierung im Transformator 2. Aus der Phasenlage der 2. Netzstromharmonischen in Relation zur Grundschwingung der Netzspannung u_{Netz} wird auf die Richtung der Vormagnetisierung geschlossen. Dazu wird mit der Diskreten Fourier Transformation 101 aus dem Meßwert u_{Netz} der Netzspannung der komplexe Zeitzeiger U_{Netz,1} = a_{uN,1} + j.b_{uN,1} der Grundschwingung (k=1) berechnet. In einem nächsten Schritt 102 wird die Phasenlage ϕ des Grundschwingungszeigers U_{Netz,1} in Bezug auf die reelle Achse (a) des DFT-Bezugssystems durch quadrantenrichtige Auswertung des Arcus-Tangens des Quotienten b_{uN,1}/a_{uN,1} berechnet. Der ermittelte Winkel ϕ wird im nachfolgenden Schritt 103 mit dem Wert (-2) multipliziert: ϕ* = (-2) * ϕ. Der gemessene Zeitzeiger I_{Netz,2} der 2. Netzstromharmonischen wird in einem zusammenführenden Verfahrensschritt 104 um diesen korrigierten Winkel ϕ* gedreht: I_{Netz,2}* = I_{Netz,2} * e^{j.ϕ*}. Durch diese Drehung wird der 2. Netzstromzeitzeiger in ein Koordinatensystem transformiert (a_{iN,2}* + j.b_{iN,2}*), dessen reelle Achse in Richtung des Zeitzeigers der Netzspannungsgrundschwingung zeigt. In diesem Koordinatensystem gibt das Vorzeichen des Imaginärteils sign (b_{iN,2}*) die Richtung und der Betrag |b_{iN,2}*| das Ausmaß der Vormagnetisierung des Transformators 2 an.

Das Ausgangssignal b_{iN},₂* des Vormagnetisierungsdetektors 13 kann daher unmittelbar dem Vormagnetisierungsregler 14 zur Ermittlung eines der Vormagnetisierung entgegenwirkenden sekundären Gleichstromsollwertes i_{QSoll,DC} zugeführt werden.

In Figur 4 ist die Funktion des Vormagnetisierungsreglers 14 dargestellt. Das Detektionssignal b_{iN,2}* wird einem Regler 200 zugeführt. Im einfachsten Fall kann ein einfacher proportional wirkender P-Regler verwendet werden. Das Ausgangssignal des Reglers 200 wird in einem darauf folgenden Begrenzer 201 begrenzt, damit vom Netzstromrichter 3 auch bei extrem großer Gleichstromvormagnetisierung keine unzulässig hohen Sekundärströme i_{Q} eingestellt werden. Mit einem Komparator 202 wird das Detektionssignal b_{iN,2}* mit einem Schwellwert (beispielsweise 0,25% des primären Transformatornennstromes) verglichen. Erst wenn die Vormagnetisierung diesen Schwellwert überschreitet, wird von einem Umschalter 203 der Gleichstromsollwert i_{QSoll, DC} für die unterlagerte Stromregelung 12 von Null auf den begrenzten Ausgangswert des Begrenzers 201 umgeschaltet. Damit ist sichergestellt, dass der Vormagnetisierungsregler 14 erst zu arbeiten beginnt, wenn die Vormagnetisierung des Transformators 2 ein bestimmtes Mindestausmaß überschritten hat.

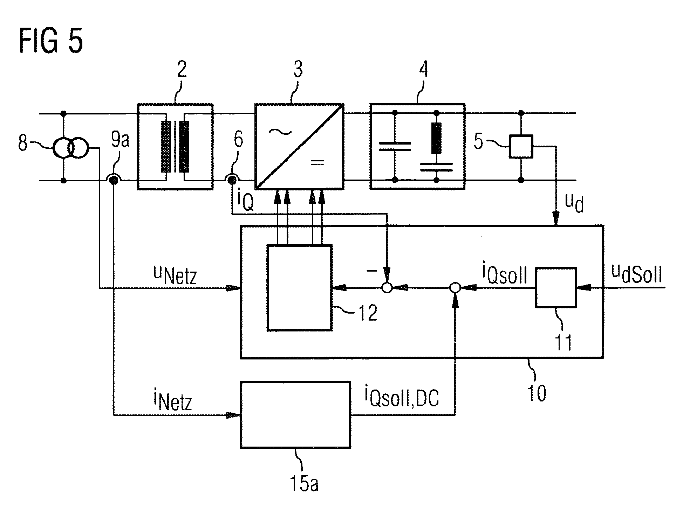

Eine andere Ausprägung der Erfindung ist in Figur 5 dargestellt. Basierend auf der in Figur 1 dargestellten Anordnung wird dabei mit einem aktiven Netzstromwandler 9a der Netzstrom i_{Netz} gemessen. Mit diesem aktiven Wandler 9a wird sowohl der Gleichanteil als auch der Wechselanteil erfasst. Dementsprechend ist in einer Auswerteeinrichtung 15a keine Analyse von Harmonischen erforderlich und ein Korrekturwert für den Stromsollwert i_{QSoll} der Stromregelung 12 kann in einfacher Weise durch Tiefpass-Filterung des Messwertes und einen Gleichstromregler unmittelbar vorgegeben werden.

Eine weitere Ausprägung ist mit einer Messeinrichtung realisierbar, welche ausschließlich den Gleichanteil der Netzspannung u_{Netz} erfasst. Dieser Gleichanteil der Netzspannung u_{Netz} ist dann entsprechend dem ohmschen Widerstand der Primärwicklung proportional zum Gleichstromanteil des Netzstromes i_{Netz}. Bei dieser Ausprägung kann auf einen Stromwandler verzichtet werden. Ebenso ist in der Auswerteeinrichtung keine Tiefpass-Filterung erforderlich.

## Patentansprüche

1. Verfahren zur Regelung eines Netzstromrichters (3) für Schienenfahrzeuge, wobei mittels eines Stromabnehmers (1), welcher eine Netzspannung (u_{Netz}) eines einphasigen Wechselstromnetzes abgreift, dem Netzstromrichter (3) über einen Transformator (2) ein Netzstrom (i_{Netz}) zugeführt wird und am Netzstromrichter (3) ausgangsseitig eine konstante Zwischenkreisgleichspannung (u_{d}) erzeugt wird, wobei auf der Transformatorprimärseite ein Gleichstromanteil des Netzstromes (i_{Netz}) mittels geeigneter Mess- und Auswerteeinrichtungen (8, 9, 15 bzw. 8a, 9a, 15a) detektiert wird und dass ein dem Gleichstromanteil entsprechender Gleichstromsollwert (i_{QSoll, DC}) einem Stromsollwert (i_{QSoll}) einer sekundärseitigen Stromregelung (12) des Netzstromrichters (3) in der Weise überlagert wird, dass ein von der Stromregelung (12) eingestellter sekundärseitiger Gleichstrom einer Vormagnetisierung des Transformators (2) entgegenwirkt, **dadurch gekennzeichnet, dass** in einem Vormagnetisierungsdetektor (13) mittels einer Diskreten Fourier Transformation der komplexe Zeitzeiger der zweiten Oberschwingung des Netzstromes (i_{Netz}) ermittelt wird und dass das Ausmaß der Vormagnetisierung als Amplitude dieses Zeitzeigers bestimmt wird und dass aus der Phasenlage der zweiten Oberschwingung des Netzstromes (i_{Netz}) zur Grundschwingung der Netzspannung (u_{Netz}) die Richtung der Vormagnetisierung bestimmt wird und dass des Weiteren Ausmaß und Richtung der Vormagnetisierung einem Vormagnetisierungsregler (14) zugeführt werden und dass in diesem Vormagnetisierungsregler (14) daraus der Gleichstromsollwert (i_{Qsoll, DC}) für die Stromregelung (12) des Netzstromrichters (3) bestimmt wird.

2. Verfahren nach Anspruch 1, **dadurch gekennzeichnet, dass** der primärseitige Gleichstromanteil mittels eines aktiven Netzstromwandlers (9a) und einer geeigneten Auswerteeinrichtung (15a) detektiert wird.

3. Verfahren nach Anspruch 1, **dadurch gekennzeichnet, dass** der primärseitige Gleichstromanteil mittels eines passiven Netzstromwandlers (9) und eines passiven Netzspannungswandlers (8) und einer geeigneten Auswerteeinrichtung (15) durch eine Analyse der zweiten Oberschwingung des Netzstromes (i_{Netz}) detektiert wird.

4. Anordnung zur Durchführung eines Verfahrens nach einem der Ansprüche 1 bis 3, **dadurch gekennzeichnet, dass** auf der Transformatorprimärseite geeignete Messeinrichtungen (8, 9 bzw. 9a) zur Erfassung des Netzstromes (i_{Netz}) und der Netzspannung (u_{Netz}) vorgesehen sind und dass diese Messeinrichtungen (8, 9 bzw. 9a) mit einer Auswerteeinrichtung (15 bzw. 15a) zur Vorgabe eines Gleichstromsollwertsignals verbunden sind, dass auf der Transformatorsekundärseite eine Messeinrichtung (6) zur Erfassung des sekundärseitigen Stromes (i_{Q}) vorgesehen ist und dass des Weiteren ein Stromregler (12) zur Ansteuerung des Netzstromrichters (3) angeordnet ist, welchem ein aus einem Sollwertsignal, dem Gleichstromsollwertsignal und einem Messsignal des sekundärseitigen Stromes (i_{Q}) gebildetes Eingangssignal zugeführt ist.

5. Anordnung nach Anspruch 4 zur Durchführung eines Verfahrens nach Anspruch 2, **dadurch gekennzeichnet, dass** die Messeinrichtung einen aktiven Netzstromwandler (9a) umfasst und dass die Auswerteeinrichtung (15a) ein Tiefpassfilter und einen Gleichstromregler zur Vorgabe eines Gleichstromsollwertsignals umfasst.

6. Anordnung nach Anspruch 5 zur Durchführung eines Verfahrens nach Anspruch 3, **dadurch gekennzeichnet, dass** die Messeinrichtungen einen passiven Netzstromwandler (9) und einen passiven Netzspannungswandler (8) umfassen und dass die Auswerteeinrichtung (15) einen Vormagnetisierungsdetektor (13) und einen Vormagnetisierungsregler (14) zur Vorgabe eines Gleichstromsollwertsignals umfasst.

7. Anordnung nach einen der Ansprüche 5 oder 6, **dadurch gekennzeichnet, dass** der Netzstromsteller (3) als Vierquadrantensteller ausgebildet ist.

## Claims

1. Method for regulating a line power converter (3) for rail vehicles, wherein a line current (i_{Netz}) is fed to the line power converter (3) via a transformer (2) by means of a current collector (1) that takes a line voltage (U_{Netz}) from a single-phase AC mains power supply, and a constant intermediate direct voltage (u_{d}) is generated on the output side of the line power converter (3), wherein a direct-current component of the line current (i_{Netz}) on the primary side of the transformer is detected by means of suitable measuring and analysis devices (8, 9, 15 and 8a, 9a, 15a), and that a nominal value of the direct current (i_{QSoll, DC}) that corresponds to the direct-current component is superimposed on a nominal current value (i_{QSoll}) of a secondary-side current regulator (12) of the line power converter (3) in such a way that a 'secondary-side direct current set up by the current regulator (12) counteracts pre-magnetisation of the transformer (2), **characterised in that**, in a pre-magnetisation detector (13), the complex time indicator of the second harmonic oscillation of the line current (i_{Netz}) is determined by means of a discrete Fourier transform and that the extent of the pre-magnetisation is defined as an amplitude of this time indicator, and that the direction of the pre-magnetisation is determined from the phase angle of the second harmonic oscillation of the line current (i_{Netz}) to the fundamental oscillation of the line voltage (u_{Netz}), and that, furthermore, the extent and direction of the pre-magnetisation are fed to a pre-magnetisation regulator (14) and that, from this data, the nominal value of direct current, (i_{QSoll,DC}), is determined in this pre-magnetisation regulator (14) for the current regulator (12) of the line power converter (3).

2. Method according to claim 1, **characterised in that** the primary-side alternating current component is detected using an active line current converter (9a) and a suitable analysis device.

3. Method according to claim 1, **characterised in that** the primary-side alternating current component is detected through analysis of the second harmonic oscillation of the line current (i_{Netz}) using a passive line current converter (9), a passive line voltage converter (8) and a suitable analysis device (15).

4. Arrangement for the implementation of a method according to one of claims 1 to 3, **characterised in that** suitable measuring devices (8, 9 and 9a) for recording the line current (i_{Netz}) and the line voltage (U_{Netz}) are provided on the primary side of the transformer, and that these measuring devices (8, 9 and 9a) are linked to an analysis device (15 and 15a) for specifying a signal for the nominal value of the direct current, that a measuring device (6) for recording the secondary-side current (i_{Q}) is provided on the secondary side of the transformer and that, furthermore, the arrangement includes a current regulator (12) for activating the line power converter (3) to which is fed an input signal formed of a nominal value signal, the signal for the nominal value of the direct current and a measurement signal for the secondary-side current (i_{Q}).

5. Arrangement according to claim 4 for the implementation of a method according to claim 2, **characterised in that** the measuring device comprises an active line current converter (9a) and that the analysis device (15a) comprises a low pass filter and a direct current regulator for specifying a signal for the nominal value of the direct current.

6. Arrangement according to claim 5 for the implementation of a method according to claim 3, **characterised in that** the measuring devices comprise a passive line current converter (9) and a passive line voltage converter (8), and that the analysis device (15) comprises a pre-magnetisation detector (13) and a pre-magnetisation detector (14) for specifying a signal for the nominal value of the direct current.

7. Arrangement according to one of claims 5 or 6, **characterised in that** the line power converter (3) is configured as a four-quadrant regulator.

## Revendications

1. procédé destiné à la régulation d'un convertisseur du courant du réseau (3) pour véhicules sur rail, un courant du réseau (i_{Netz}) étant amené au convertisseur du courant du réseau (3) via un transformateur (2) au moyen d'un pantographe (1) qui capte une tension du réseau (u_{Netz}) d'un réseau de courant alternatif monophasé, et une tension continue constante de circuit intermédiaire (u_{d}) étant générée au niveau du convertisseur du courant du réseau (3) côté sortie, une fraction de courant continu du courant du réseau (i_{Netz}) étant, du côté primaire du transformateur, détectée au moyen de dispositifs appropriés de mesure et d'évaluation (8, 9, 15 resp. 8a, 9a, 15a), et une valeur de consigne du courant continu (i_{Qsoll, DC}) correspondant à la fraction de courant continu étant superposée à une valeur de consigne du courant (i_{QSoll}) d'une régulation du courant du côté secondaire (12) du convertisseur du courant du réseau (3) de manière telle qu'un courant continu du côté secondaire réglé par la régulation du courant (12) agit à l'encontre d'une prémagnétisation du transformateur (2), **caractérisé en ce que**, dans un détecteur de prémagnétisation (13), le phaseur de temps complexe du deuxième harmonique du courant du réseau (i_{Netz}) est déterminé au moyen d'une transformation de Fourier discrète et **en ce que** l'ampleur de la prémagnétisation est déterminée comme étant l'amplitude de ce phaseur de temps et **en ce que** la direction de la prémagnétisation est déterminée à partir de la position de phase du deuxième harmonique du courant du réseau (i_{Netz}) par rapport à l'oscillation fondamentale de la tension du réseau (u_{Netz}) et **en ce que** l'ampleur et la direction de la prémagnétisation sont en outre amenées à un régulateur de prémagnétisation (14) et **en ce qu'**est déterminée sur cette base, dans ce régulateur de prémagnétisation (14), la valeur de consigne du courant continu (i_{Qsoll, DC}) pour la régulation du courant (12) du convertisseur du courant du réseau (3).

2. Procédé selon la revendication 1, **caractérisé en ce que** la fraction de courant continu du côté primaire est détectée au moyen d'un transformateur actif du courant du réseau (9a) et d'un dispositif d'évaluation approprié (15a).

3. Procédé selon la revendication 1, **caractérisé en ce que** la fraction de courant continu du côté primaire est détectée au moyen d'un transformateur passif du courant du réseau (9) et d'un transformateur passif de la tension du réseau (8) et d'un dispositif d'évaluation approprié (15) par une analyse du deuxième harmonique du courant du réseau (i_{Netz}).

4. Dispositif pour exécuter un procédé selon l'une des revendications 1 à 3, **caractérisé en ce que** sont prévus, du côté primaire du transformateur, des dispositifs de mesure appropriés (8, 9 resp. 9a) pour détecter le courant du réseau (i_{Netz}) et la tension du réseau (u_{Netz}) et **en ce que** ces dispositifs de mesure (8, 9 resp. 9a) sont reliés à un dispositif d'évaluation (15 resp. 15a) pour prescrire un signal de valeur de consigne du courant continu, **en ce qu'**est prévu, du côté secondaire du transformateur, un dispositif de mesure (6) pour détecter le courant (i_{Q}) du côté secondaire et **en ce qu'**est en outre disposé un régulateur de courant (12) pour commander le convertisseur du courant du réseau (3), auquel est amené un signal d'entrée formé à partir d'un signal de valeur de consigne, du signal de valeur de consigne de courant continu et d'un signal de mesure du courant du côté secondaire (i_{Q}).

5. Dispositif selon la revendication 4 pour exécuter un procédé selon la revendication 2, **caractérisé en ce que** le dispositif de mesure comprend un transformateur actif du courant du réseau (9a) et **en ce que** le dispositif d'évaluation (15a) comprend un filtre passe-bas et un régulateur de courant continu pour prescrire un signal de valeur de consigne du courant continu.

6. Dispositif selon la revendication 5 pour exécuter un procédé selon la revendication 3, **caractérisé en ce que** les dispositifs de mesure comprennent un transformateur passif du courant du réseau (9) et un transformateur passif de la tension du réseau (8) et **en ce que** le dispositif d'évaluation (15) comprend un détecteur de prémagnétisation (13) et un régulateur de prémagnétisation (14) pour prescrire un signal de valeur de consigne du courant continu.

7. Dispositif selon l'une des revendications 5 ou 6, **caractérisé en ce que** le variateur du courant du réseau (3) se présente sous la forme d'un variateur à quatre quadrants.
